# EUROPEAN PATENT SPECIFICATION

(11) **EP 2 208 373 B1**
(45) Date of publication and mention of the grant of the patent: **29.02.2012**
(21) Application number: 08833833.0
(22) Date of filing: 26.09.2008
(51) Int. Cl.: H04W 8/24

(54) **APPARATUS AND METHODS FOR NETWORK IDENTIFICATION OF OPEN MARKET WIRELESS DEVICES**
VORRICHTUNGEN UND VERFAHREN ZUR NETZWERKIDENTIFIKATION VON DRAHTLOSEN OPEN-MARKET-GERÄTEN
APPAREIL ET PROCÉDÉ D'IDENTIFICATION DE RÉSEAU DES DISPOSITIFS SANS FIL DU MARCHÉ LIBRE

(30) Priority: 26.09.2007 US 975405 P; 04.08.2008 US 185321
(43) Date of publication of application: 21.07.2010
(73) Proprietor: QUALCOMM Incorporated, San Diego, CA 92121 (US)
(72) Inventor: DUGGAL, Nakul, San Diego CA 92121 (US); QU, Hai, San Diego CA 92121 (US); GURGANUS, Bryan, San Diego CA 92121 (US)
(74) Representative: Heselberger, Johannes
(86) International application number: PCT/US2008/077817
(87) International publication number: WO 2009/042843

(56) References cited:
- EP-A- 1 519 600
- EP-A1- 1 411 712
- WO-A-2005/053348
- US-A1- 2005 059 385
- US-A1- 2005 153 741

## Description

### BACKGROUND

### Field

The present aspects relate to wireless communication devices, and more particularly, to apparatus and methods for network operator identification of open market wireless devices.

### Background

A wireless communication device, otherwise referred to as a handset, is utilized to communicate with another handset or a landline phone via a wireless communication network. In order to establish a connection with the wireless communication network, the handset must have a relationship with an operator or service provider to allow access to the wireless communication network and to manage billing the user of the handset for the use of the wireless communication network. In a closed market system, the operator maintains a degree of control over the distribution and sale of handsets operable on the wireless communication network of the operator. For example, the operator may distribute and sell the handsets itself, or authorize a third party to perform this task, where the respective closed market handsets are authorized and provisioned by the operator to work on the wireless communication network of the operator. Thus, a closed market handset is limited for use in a specific wireless communication network corresponding to the respective operator.

In contrast to the closed market system, an open market system allows a handset to be distributed and sold for use on any of a plurality of wireless communication networks each corresponding to a respective one of a plurality of different operators. In the closed market system, a user must obtain a removable module, such as a smart card, from one of the plurality of different operators, where the user identity module includes a key or other authorization mechanism allowing operation on one of the plurality of wireless communication networks. The user may then insert a removable module that includes user identity information into the open market handset, thereby enabling the open market handset to communicate with the respective wireless communication network associated with the operator that authorized the removable module. For example, a removable module may be referred to as a Removable User Identity Module (RUIM) for a Code Division Multiple Access (CDMA) system, a CDMA Subscriber Identity Module (CSIM) based on a Universal Integrated Circuit Card (UICC) for a CDMA system, Universal Subscriber Identity Module (USIM) based on a UICC for Universal Mobile Telecommunications System (UMTS), or a Subscriber Identity Module (SIM) in a Global System for Mobile communications (GSM) system. For the sake of brevity the term removable module is used herein throughout to refer to any module that may be inserted or otherwise is communication with a wireless device that provides for storage of data, such as user identity information.

In the open market system, while the network operators control the user identity modules, the network operators have no control over wireless devices into which the user identity modules are inserted. As such, the network operator has no way of knowing which particular devices (for example, the manufacturer, model type or the like) are being used by each subscriber (i.e., user identity module holder) in their respective network. This is because the wireless devices may have been purchased from the Original Equipment Manufacturer (OEM) or another third party distribution channel.

Tracking the devices that are being implemented in the network provides the network operator with valuable information. The device identification information may be used to assess the capabilities of the devices in the system so that the network providers can better tailor service availability based on device capability. Additionally, when the network operators have information that allows them to identify the particular devices being used in the network, the network operators can use the information for marketing purposes. For example, a network operator may provide exclusive offers or incentives to a particular wireless device type that is readily used in the network or the like. In addition, the network operators may desire to know the current state of the wireless devices in the network, in terms of the current capabilities of the device (*i.e*., the current hardware capabilities and/or the current software/firmware capabilities as defined by the software/firmware revision number).

Additionally, device type knowledge may be beneficial to the network operator in providing customer care/technical assistance to an open market network subscriber in need of such. While the network subscriber may be able to provide the requisite information manually, in certain instances the information needed for the network operator to provide the necessary technical support is not readily available to the subscriber. In other instances, due to the problems that the subscriber is experiencing, the subscriber may not be able to access the requisite information, such as make, model, serial number or the like on the device.
The EP 1 519 600 relates to a telecommunication system which comprises a mobile communication network (34), a mobile station (30) operating in the mobile communication network, and a server (361) communicating with the mobile communication network. The subscriber identity module (32) of the mobile station inquires selected property data from the mobile terminal (31) over an application interface (33), this function being activated in response to the connecting of the subscriber identity module and the mobile terminal. The property data are compared with the data stored in the subscriber identity module earlier and a message concerning the selected property data is transmitted to a predetermined server in response to the enquired property data being different from the stored property data. The server (361) comprises a first database (366) for storing a first set of property data on the mobile terminal currently in use in a mobile subscriber specific manner. An advantage of the invention is that the data on the selected properties of the mobile terminal in use can be maintained automatically on the network side, in which case the data are easily retrievable for various applications.
Further, the US 2005/0153741 relates a network with mobile devices which support registration of mobile devices, detection of changes to MSISDN-to-IMEI mapping information, and appropriate modification of such registrations. In one embodiment, the network maintains mapping between IMEI, MSISDN and a profile.
Finally, document EP 1 411 712 A1 describes a communication system and method via which users can obtain assistance from an operator on the use of their equipment such as, for example, a mobile phone. The user contacts the operator who, using data relating to the equipment, retrieved from a database, talks to the user through the use of their equipment. As the user attempts to give effect to any operator instructions, feedback is provided to the operator on the progress made by the user in attempting to implement those instructions.

Therefore a need exists, to properly and efficiently identify the particular open market wireless devices that being used in a wireless network. The desired methods and apparatus should provide for an automated process for identifying the wireless devices in the system and, therefore, provide a level of transparency to the network subscriber (*i.e.,* the holder of the removable module). In addition, the desired system and apparatus should identify identification of devices as they are initially introduced into the network. Additionally, a need exists to insure that the identification and other profile data associated with the devices in the network reflects the current state of the wireless device in terms of hardware and/or software/firmware capabilities. A further need exists to dynamically identify and/or assess the capabilities of open market wireless devices in the instance in which the network operator is providing customer care or technical support to the subscriber via over-the-air communications or the like.

### SUMMARY

The invention is defined in independent claims 1 and 8.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Present methods, apparatus and systems for network identification of open market wireless communication devices. Specifically, the present innovation provides for the wireless device to send identification information, herein referred to as profile information, to a network entity, such as a network operator or the like, based on the receipt of a removable module in the wireless device. In one aspect, the removable module includes an executable application that provides for the removable module to retrieve the profile information from the associated wireless device and initiate the communication of the profile information to the network entity. The removable module -based application may further be operable to recognize that the device is being associated with the removable module for a first time (*i.e.* an initial insertion of the removable module in the wireless device), such that profile information is only communicated to the network entity based on a first time association/insertion of the removable module with the device. Thus, present aspects provide for automated network identification of open market wireless devices, such that, network operators can readily and automatically identify open market wireless devices being used in their respective networks. Accordingly, the automated nature of the described aspects provide for network identification of open market wireless devices without requiring the device users to manually register or otherwise identify their respective devices.

In addition, present aspects provide the network entity, such as the network operator or a third party entity, the ability to remotely access the removable module to request retrieval and communication of the profile information on an as needed basis. This aspect of the innovation is particularly useful in technical assistance/customer care scenarios, in which the network operator/customer care representative can remotely access and retrieve the profile information. Such remote access and retrieval, alleviates the need for the user of the device to locate the information on the device and manually convey the information to the network operator/customer care representative.

In one aspect a method is defined for network identification of an open market communication device. The method includes receiving a removable module at a wireless communication device. The removable module includes configuration to enable the removable module to communicate with a wireless network. The method additionally includes retrieving device profile information from wireless communication device memory based on the receipt of the removable module. The method also includes generating a device identification message that includes at least a portion of the device profile information and communicating the device identification message, via the wireless network, to a network operator associated with the removable module.

The method may further optionally include determining that network identification of the wireless device is required prior to retrieving the device profile information. The determination may be based on an initial, first-time, receipt of the removable module in the wireless communication device. As such, the determination may further include accessing a removable module memory to determine that a device identifier associated with the wireless communication device is not stored in the removable module memory. If the device identifier is not stored in the removable module memory, it is assumed that the removable module has not been associated with this particular wireless device previously and, therefore, a need exists to provide network identification of the open market wireless device. Based on the device identifier not existing in the removable module memory, the method may additionally include storing the device identifier in the removable module memory to insure that subsequent receipt/insertion of the removable module in the wireless device does not trigger the network identification process.

The method may additionally include launching a removable module-based device identification application in response to receiving the removable module in the wireless communication device. The removable module-based application may further be implemented to initiate the retrieval of the device profile information and initiate the generation of the device identification message. In some aspects, the device identification application may further be implemented to determine that network identification of the wireless device is required.

In some aspects of the method retrieving device profile information may further include executing a removable module interface application to retrieve the device profile information from the wireless communication device memory. In one specific method aspect, the removable module interface application may be a Code Division Multiple Access (CDMA) Card Application Toolkit (CCAT) application or the like. Additionally, in some aspects of the method the profile information may be further defined as at least one of device manufacturer identifier, a device model identifier, a device identifier, such as an Electronic Serial Number (ESN) or the like, a software identifier, a software revision identifier, a firmware identifier, a firmware revision identifier, hardware identifier, and hardware capability identifier.

In some aspects of the method generating the device identification message further comprises generating a Short Message Service (SMS) communication that includes the device profile information. In alternate aspects, other communication mechanisms may be used to communicate the profile information to the network entity.

In other optional aspects, the method may include receiving a device identification request that requests dynamic network identification of the wireless communication device and retrieving the device profile information from the wireless communication device memory in response to receipt of the device identification request. The method further includes generating a second device identification message that includes the device profile information and communicating the second device identification message to a network entity associated with the device identification request. The method may further include launching a removable module-based device identification application in response to the device identification request, such that the device identification application initiates the retrieving of the device profile information and initiates the generating of the second device identification message. This aspect is drawn to the instance in which a network operator representative, such as a customer care representative or the like, dynamically accesses the removable module to retrieve the profile information.

A related aspect is provided for by at least one processor configured to provide network identification of an open market wireless communication device. The processor includes a first module for acknowledging receipt of a removable module at a wireless communication device and a second module for retrieving device profile information from wireless communication device memory in response to the receipt of the removable module. The removable module includes configuration to enable the removable module to communicate with a wireless network. The processor additionally includes a third module for generating a device identification message that includes at least a portion of the device profile information and a fourth module for communicating the device identification message, via the wireless network, to a network operator associated with the removable module.

A further related aspect is defined by a computer program product that includes a computer-readable medium. The medium includes a first set of codes for causing a computer to acknowledge receipt of a removable module at a wireless communication device and a second set of codes for causing the computer to retrieving device profile information from wireless communication device memory in response to the receipt of the removable module. The removable module includes configuration to enable the removable module to communicate on a wireless network. The medium additionally includes a third set of codes for causing the computer to generate a device identification message that includes the device profile information and a fourth module for communicating the device identification message, via the wireless network, to a network operator associated with the removable module.

Yet a further related aspect is provided for by an apparatus for network identification of an open market wireless communication device. The apparatus includes means for receiving a removable module at a wireless communication device and means for retrieving device profile information from wireless communication device memory in response to the receipt of the removable module. The removable module comprises configuration to enable the removable module to communicate on a wireless network. The apparatus additionally includes means for generating a device identification message that includes the device profile information and means for communicating the device identification message, via the wireless network, to a network operator associated with the removable module.

Another related aspect is defined by a wireless communication device that includes a computer platform including a processor and a memory that stores device profile information. The device also includes a messaging module, such as a Short Messaging Service (SMS) module or the like, operable for generating wireless communication. Additionally, the device includes a removable module in communication with the processor. The removable module includes configuration to enable the removable module to communicate on a wireless network and a device identification application operable to be launched when the removable module is received in the device, initiate retrieval of device profile information from the memory and prompt the messaging module to initiate generation of a device identification message that includes the device profile information. The wireless device additionally includes a communications module in communication with the processor and the removable module that is operable to communicate the device identification message, via the wireless network, to a network operator associated with the removable module.

In one aspect of the device the device identification application is further operable to determine if device identification of the wireless device is required. In such aspects, determination may be based on whether the receipt of the removable module in the wireless device is an initial, first-time receipt/insertion. The determination may be performed by accessing a removable module memory to determine if a device identifier associated with the wireless communication device is not stored in the removable module memory. As previously noted, if the device identifier is stored in the removable module memory it is assumed that the removable module has been previously associated/inserted in this particular wireless device and that the network has previously received the profile information related to this particular device. Thus, in certain aspects, the device is further operable to store the device identifier in removable module memory during the device identification procedure to insure that subsequent insertions of the removable module in the device do not trigger they need to provide the network with device identification.

In other aspects, the removable module may further include an interface application in communication with the processor and operable to retrieve the device profile information from the wireless communication device memory. In one specific application, the interface application may be a Code Division Multiple Access (CDMA) Card Application Toolkit (CCAT) application. The device profile information that is retrieved and subsequently included in the device identification message may include, but is not limited to, at least one of a device manufacturer identifier, a device model identifier, a device identifier, a software identifier, a software revision identifier, a firmware identifier, a firmware revision identifier, hardware identifier, and hardware capability identifier.

In other optional aspects, the communications module is further operable to receive a device identification request that is operable to request dynamic network identification of the wireless communication device. The network identification application is further operable to initiate retrieving of the device profile information from the memory in response to receipt of the device identification request and prompt the messaging module to initiate generating a second device identification message that includes the device profile information. Additionally, the communications module is further operable to communicate the second device identification message to a network entity associated with the device identification request. As such, this aspect is drawn to the instance in which a network operator representative, such as a customer care representative or the like, dynamically accesses the removable module to retrieve the profile information.

A further aspect of the innovation is provided for by a method for requesting identification of an open market wireless communication device. The method includes generating a device identification request at a network entity and communicating the device identification request to a removable module. The method further includes receiving, at the network entity, a response to the device identification request that includes device profile information associated with an open market wireless communication device in communication with the removable module and storing the device profile information in a database that associates the removable module with one or more open market devices.

In certain aspects of the method, generating a device identification request may further include generating the device identification request based on a removable module contacting the network entity for assistance. In other aspects of the method, generating a device identification request may further include generating the device identification request periodically based on a predetermined update schedule.

In certain aspects of the method, generating a device identification request may further provide for generating a Short Message Service (SMS) that includes a request for the device profile information. In such aspects, receiving, at the network entity, a response to the device identification request may further provide for receiving a SMS that includes the device profile information. As previously noted the device profile information may include, but is not limited to, at least one of a device manufacturer identifier, a device model identifier, a device identifier, a software identifier, a software revision identifier, a firmware identifier, a firmware revision identifier, hardware identifier, and hardware capability identifier.

A related aspect of the innovation is defined by at least one processor configured for requesting identification of an open market wireless communication device. The processor includes a first module for generating a device identification request at a network entity and a second module for communicating the device identification request to a removable module. The processor additionally includes a third module for receiving a response to the device identification request that includes device profile information associated with an open market wireless communication device in communication with the removable module and a fourth module for storing the device profile information in a database that associates the removable module with one or more open market devices.

Yet a further related aspect is provided for by a computer program product that includes a computer-readable medium. The medium includes a first set of codes for causing a computer to generate a device identification request at a network entity and a second set of codes for causing the computer communicating the device identification request to a removable module. The medium additionally includes a third set of codes for causing the computer to receive a response to the device identification request that includes device profile information associated with an open market wireless communication device in communication with the removable module and a fourth set of codes for causing the computer to store the device profile information in a database that associates the removable module with one or more open market devices.

An apparatus for requesting identification of an open market wireless communication device defines yet another related aspect. The apparatus includes means for generating a device identification request at a network entity and means for communicating the device identification request to a removable module. Further, the apparatus includes means for receiving, at the network entity, a response to the device identification request that includes device profile information associated with an open market wireless communication device in communication with the removable module and means for storing the device profile information in a database that associates the removable module with one or more open market devices.

A network device provides for a further aspect of the present innovation. The device includes a computer platform including a processor and memory. The device also includes a messaging module, such as a SMS module or the like, stored in the memory, in communication with the processor, and operable to generate wireless communication messages. Additionally, the device includes a device identification request module stored in the memory and in communication with the processor. The device identification request module is operable to prompt the messaging module to initiate generation of a device identification request. Further, the device includes a communications module in communication with the processor and operable to communicate the device identification request to an identified removable module and receive a response to the device identification request that includes device profile information associated with an open market wireless communication device in communication with the removable module. The device also includes a removable module device database that is operable to store the device profile information as an association with the removable module.

In one aspect of the network device, the device identification module is further operable to generate the request based on a removable module user contacting the network entity for assistance. In other aspects of the network device, the device identification module is further operable to generate the device identification request periodically based on a predetermined update schedule.

Thus, present aspects provide for methods, apparatus and systems for automatically providing network operators with identification of open market wireless devices that are used in the operator's respective network. Present aspects accomplish such by retrieving device profile information in response to the network operator's removable module being associated with (*i.e*., inserted into) a wireless device and communicating the device profile information to the network operator or the like. This allows for the network operator or third party entity to track and/or monitor the type of wireless devices existing in their respective wireless network. In addition, the automated nature of the tracking obviates the need for the subscribers/users of the removable modules to manually or otherwise provide the device identification to the network operators. In addition, present aspects provide for the network operators or third party entities to remotely and dynamically access the removable module to retrieve profile information related to the wireless device that a removable module is currently in communication with. This aspect, allows the network operator or third party entity to automatically retrieve and, in some aspects, update the profile information without requiring user intervention.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE ATTACHMENTS

The disclosed aspects will hereinafter be described in conjunction with the appended drawings, provided to illustrate and not to limit the disclosed aspects, wherein like designations denote the elements, and in which:

Fig. 1 is a schematic diagram of a system for providing network identification of open market wireless devices, in accordance with an aspect;

Fig. 2 is a schematic diagram of an open market wireless device and an associated removable module within a system for providing network identification of open market wireless devices, in accordance with an aspect;

Fig. 3 is schematic diagram of a network entity/device within a system for providing a network identification of open market wireless devices, in accordance with an aspect;

Fig. 4 is a schematic diagram of one aspect of a wireless communication device operable as described herein;

Fig. 5 is a schematic diagram of one aspect of a network device operable as described herein;

Fig. 6 is a schematic diagram of a cellular wireless network used to provide messaging in conjunction with present aspects for network identification of open market wireless devices being used in the network;

Fig. 7 is a flow diagram depicting a method for providing network identification of an open market wireless device, according to another aspect;

Fig. 8 is a flow diagram depicting a method for providing a network identification of open market wireless devices, in accordance with an aspect; and

Fig. 9 is flow diagram of a method for requesting identification of an open market wireless device at a network entity, according to a further aspect.

### DETAILED DESCRIPTION

The present devices, apparatus, methods, computer-readable media and process ors now will be described more fully hereinafter with reference to the accompanying drawings, in which aspects of the innovation are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the innovation to those skilled in the art. Like numeric designators in the figures and the detailed description refer to like elements throughout.

Present aspects herein disclose apparatus and methods that provide for the network identification of the open market wireless devices that are being used in the network. Specifically, the present innovation provides for the wireless device to send identification information, herein referred to as profile information, to a network entity, such as a network operator or the like, based on the receipt (*e.g*., insertion) of a removable module in the wireless device. In one aspect, the removable module includes an executable application that provides for the removable module to retrieve the profile information from the associated wireless device and initiate the communication of the profile information to the network entity. The removable module-based application may further be operable to recognize that the device is being associated with the removable module for a first time (*i.e.,* an initial insertion of the removable module in the wireless device), such that profile information is only communicated to the network entity based on a first time association/insertion of the removable module with the device.

Thus, present aspects provide for automated network identification of open market wireless devices, such that, network operators can readily and automatically identify open market wireless devices being used in their respective networks. Accordingly, the automated nature of the described aspects provide for network identification of open market wireless devices without requiring the device users to manually register or otherwise identify their respective devices. The network operator benefits from knowing which type, model, and the like wireless devices are being implemented in their wireless networks and can use this device profile information for marketing purposes and the like.

In addition, present aspects provide the network entity, such as the network operator or a third party entity, the ability to remotely access the removable module to request retrieval and communication of the profile information on an as needed basis. This aspect of the innovation is particularly useful in technical assistance/customer care scenarios, in which the network operator/customer care representative can remotely access and retrieve the profile information without any intervention on behalf of the device user. Such remote access and retrieval, alleviates the need for the user of the device to locate the information on the device and manually convey the information to the network operator/customer care representative.

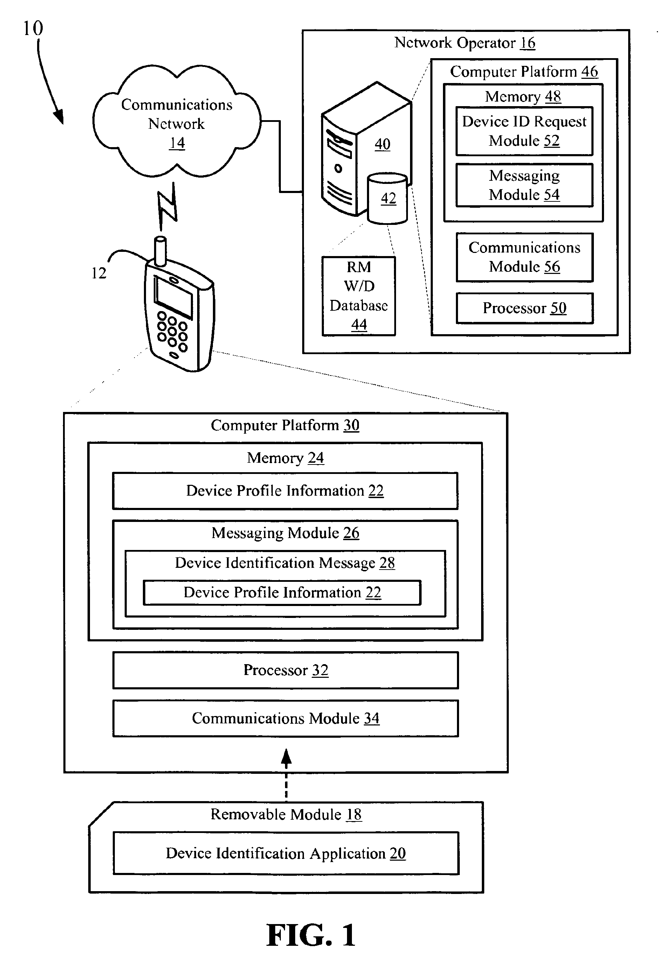

Referring to Figure 1, in one aspect, a system **10** for providing network identification of open market wireless devices includes an open market wireless device **12** operating on a communications network **14** under control of a network operator **16.** As previous noted in the open market wireless network environment, the network operator **16** controls and distributes removable modules **18** that provide a user/subscriber with access to the network **12** via any open market wireless communication device configured to receive or otherwise communicate with the removable module **18.** The removable nature of the removable module allows the module, generally in the form of a card, to be inserted or otherwise in communication with a wireless device on a non-permanent (i.e., removable) basis. As such, the network operator **16** does not have control over which open market wireless devices **12** are being used in the wireless network. Thus, according to the aspects herein described, the removable module **18** is configured to provide the network operator with identification of the wireless devices **12** that receive or otherwise communicate with the removable module **18.**

The term "removable module" is used herein to refer to any module that may be inserted or otherwise in communication with a wireless device and provides for storage of information, such as wireless service provisioning information and/or network service provisioning information. This, "removable module" may include, but is not limited to, a Removable User Identity Module (RUIM) for a Code Division Multiple Access (CDMA) system, a CDMA Subscriber Identity Module (CSIM) based on a Universal Integrated Circuit Card (UICC) for a CDMA system, Universal Subscriber Identity Module (USIM) based on a UICC for Universal Mobile Telecommunications System (UMTS), or a Subscriber Identity Module (SIM) in a Global System for Mobile communications (GSM) system or the like. According to present aspects, the removable module is configured to enable the removable module to communicate with a wireless network **14,** such as the network controlled by the network operator **16.** In this regard, in the open market scenario, the removable module **18,** as opposed to the open market wireless device **12,** is relied upon to enable communication with the wireless network.

As such, the removable module **18** includes a device identification application **20** that is operable to be launched when the removable module **18** is received in, or otherwise comes in communication with, the open market wireless device **12.** Once device identification application **18** is launched it is operable to retrieve device profile information **22** stored in the memory **24** of the open market wireless device **12** and prompt the messaging module **26,** also stored in the memory **24** of the open market wireless device **12,** to generate a device identification message **28.**

The open market wireless device **12** includes a computer platform **30** including memory **24** and at least one processor **32.** As previously noted, the memory **24** of the wireless device **12** stores device profile information **22.** The device profile information **22** includes data about the respective wireless communications device, such as, but not limited to, make (*i.e*., manufacturer), model, device identifier, such as an electronic serial number (ESN) or a mobile equipment identifier (MEID), hardware identifiers, hardware capabilities, a software/firmware identifiers, software/firmware revision identifiers, and any other wireless device-related information of interest to the network operator or a third party.

The open market wireless device **12** additionally includes a messaging module **26** operable for generating a wireless-communicable message, referred to herein as a device identification message **28** based on a prompt received from the device identification application **20** executed on the removable module **18.** The device identification message **28** serves to identify the open market wireless device **12** according to the device profile information **22.** In this regard, the device identification message 28 may include all or any portion of the device profile information **22,** as configured by the removable module and/or network operator. In one aspect, the messaging module **26** may further be defined as a Short Messaging Service (SMS), commonly referred to as a text messaging service, or any other messaging service capable of providing wireless communication between the open market wireless device **12** and the network operator **16** or third party entity. In this regard, any other voice messaging, data messaging, or multimedia messaging module may be implement in conjunction with the aspects herein disclosed without deviating from the present innovative concepts.

Additionally, the open market device includes a communications module **34** in communication with the processor **32** and operable to wirelessly communicate the device identification message **28** across wireless network **14** to the network operator **16** or other third party entity (not shown in Figure 1).

At the network operator **16** the system includes one or more network devices **40,** such as network servers and associated storage devices **42,** collectively referred to herein as a network entity. The storage device **42** includes a removable module /Wireless Device database **44** that associates removable modules **18** with each open market wireless device **12** identified according to the received profile information **22.**

In one aspect, the network device **40** includes a computer platform **46** include a memory **48** and at least one processor **50.** The network device **40** also includes a communications module **56** operable for receiving and sending wireless communications, and in particular receiving device identification messages, such as SMS messages including device profile information or the like. The memory **48** of the network device **40** includes a messaging module **54,** such as an SMS module or any other suitable messaging module, operable for receiving device identification messages **28** from the communication module **56,** acknowledging the device identification message as including device profile information **22** and forwarding the device profile information to the removable module/wireless device database **44.**

In certain aspects, the memory **48** of network device **40** may include a device identification request module **52** that is operable to initiate the generation and communication of a device identification request. In one aspect, the device identification module **52** may be implemented by a network representative/customer care representative who desires identification of the open market wireless device while assisting a user/subscriber with technical support related to the removable module and/or wireless device. In other aspects, the device identification module **52** may be configured to periodically send device identification requests to removable modules on predetermined intervals to insure the currency of device profile information. In such aspects, the messaging module **54** may be further operable to generate the device identification request based on a prompt from the device identification request module **52** and the communications module **56** may be further operable to communicate the device identification request messages to one or more removable modules deployed in the wireless network.

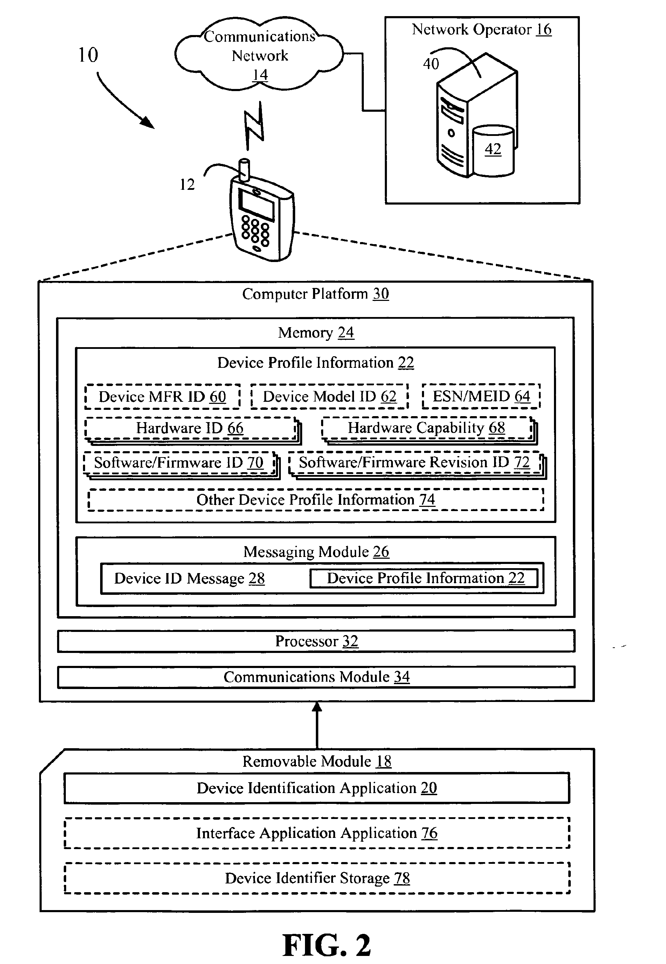

Figure 2 provides for another more detailed aspect of system **10,** specifically highlighting detailed and optional aspects of the open market wireless device **12** and associated removable module **18.** As previously described, system **10** includes an open market wireless device **12** operating on a communications network **14** under control of a network operator **16.**

The memory **24** of wireless device **12** includes device profile information **22** that serves to identify the wireless device and provides for other device capability and device status information. While the device profile information **22** shown in Figure 2 is illustrated as being stored in a single file or memory location, it should be noted that the device profile information **22** may be stored in more than one file or location or the wireless device as dictated by device configuration. In those instances in which the device profile information **22** is stored in various locations, the device identification application **20** and an associated interface applications on the removable module **18** may be configured to properly locate and retrieve the device profile information from the various storage locations.

Device profile information **22** includes data about the respective wireless communications device, such as, but not limited to, device manufacturer identifier **60;** device model identifier **62;** device identifier **64** such as an electronic serial number (ESN) or a mobile equipment identifier (MEID); a hardware identifiers **66,** such as a display identifier, a speaker identifier or the like; hardware capabilities **68,** such display resolution/configuration, speaker output/configuration or the like; software/firmware identifiers **70;** software/firmware revision identifiers **72** and any other wireless device-based profile information **74** of interest to the operator.

As noted, system **10** includes removable module **18** that includes a device identification application **20** that is operable to be launched upon receipt (*i.e*., insertion) of the removable module in the open market wireless device **12.** In optional aspects, the device identification application **20** may be further operable to determine if network identification of the wireless device is required. In such aspects, the device identification application **20,** may determine the need/requirement for network identification based on whether the receipt of the removable module is a first-time, initial receipt of the removable module by the wireless device. As such, the device identification application **20** may be configured to verify that the device identifier, such as the ESN, MEID or the like, resides in removable module -based device identifier storage **78**. If the device identifier for the device currently in communication with the removable module exists in the device identifier storage **78,** it is assumed that the removable module has been previously received by this particular wireless device. Therefore, the device profile information was previously retrieved from the device and communicated to the network operator. If the device identifier does not exist in the device identifier storage **78**, it is assumed that the removable module has not been previously received by this particular wireless device and, this, retrieval and communication of the device profile information to the network operator is needed/required.

In addition, the removable module may include an interface application **76** that is operable to allow the device identification application **20** to interface with applications/storage on the open market wireless device **12.** The interface application **76** provides the necessary protocols and the like to allow the applications residing on the removable module to communicate with the applications/storage residing on the associated wireless device **12.** In the illustrated example, the interface application **76** allows the device identification application **20** to retrieve profile information **22** and prompt the messaging module **26** to initiate generation of the device identification message **28.** In the Code Division Multiple Access (CDMA) wireless network the interface application may be a CDMA Card Application Toolkit (CCAT), while other wireless networks may implement an associated suitable interface application **76.**

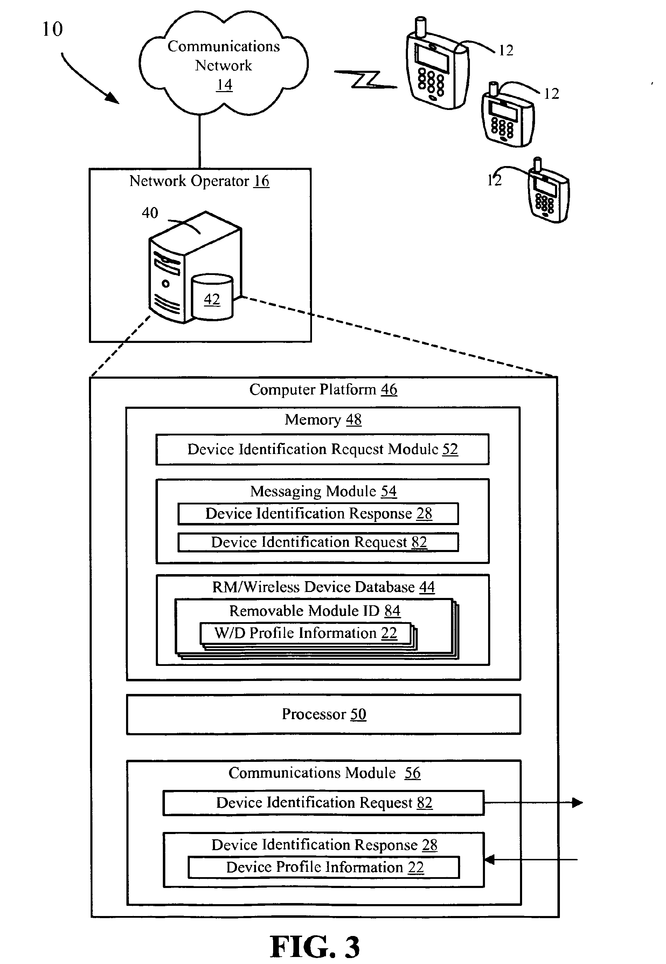

Figure 3 provides for another more detailed aspect of system **10,** specifically highlighting detailed and optional aspects of the network device **40** and associated network storage device **42.** As previously described, system **10** includes a network operator **16** including one or more network devices **40,** such as network servers and associated network storage devices **42** that store the removable module/wireless device database **44.**

As previously noted, in one aspect, the network device **40** includes a computer platform **46** including a memory **48** and a processor **50.** The network device **40** also includes a communications module **56** operable for receiving and sending wireless communications, and in particular receiving device identification messages **28** and/or sending device identification request **82,** such as SMS messages including or requesting device profile information or the like. The memory **48** of the network device **40** includes a messaging module **54,** such as an SMS module or any other suitable messaging module, operable for receiving device identification messages/responses **28** from the communication module **56,** acknowledging the device identification message/responses **28** as including device profile information and forwarding the device profile information **22** to the removable module/wireless device database **44.** In addition, the messaging module is operable to generate device identification request messages **82** based on a prompt from the device identification request module **52.**

The removable module database **44** may be configured with removable module identifier files **84** corresponding to an individual removable module controlled by the network operator **16.** As such each removable module identifier file **84** may include one or more device profile information **22,** which serve to identify the wireless devices that have been associated (i.e., used in conjunction with) with the removable module and the profile information related to the wireless device. It should be noted that the removable module identifier files **84** provide one exemplary configuration of the removable module database **44** and, as such, other configurations of the database **44,** which may not utilize removable module identifier files **84** are also possible and within the innovative concepts herein disclosed.

As previously noted, in certain aspects, the memory **48** of network device **40** may include a device identification request module **52** that is operable to initiate the generation and communication of a device identification request. In one aspect, the device identification module **52** may be implemented by a network representative/customer care representative who desires identification of the open market wireless device while assisting a user/subscriber with technical support related to the removable module and/or wireless device. This aspect allows for the network operator to dynamically retrieve device profile information without the need for user-subscriber intervention. The device profile information that the network operator requests may an initial request for the device profile information or the request may be for the purpose of updating and/or verifying profile data previously existing in the database **44.** In other aspects, the device identification module **52** may be configured to automatically send device identification requests **82** periodically to removable modules on predetermined intervals to insure the currency of device profile information.

In those aspects in which the network device **40** is configured with a device identification request module **52,** the messaging module **54** may be further operable to generate the device identification request based on a prompt from the device identification request module **52** and the communications module **56** may be further operable to communicate the device identification request messages **82** to one or more removable modules **18** deployed in the wireless network. In response to the device identification request messages **82,** the communications module **56** may receive a device identification response message **28** that includes the device profile information **22** of the open market wireless device currently associated with the removable module. The communications module **56** internally forwards the message to the messaging module **54,** which based on flags in the header and/or formatting recognizes that the communication includes wireless device profile information **22** and, in turn, forwards the device profile information to the removable module/wireless device database **44.**

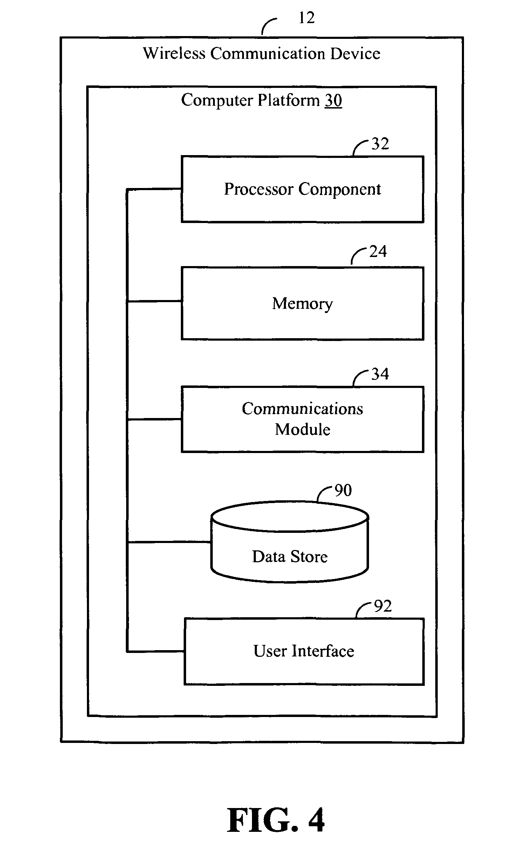

Referring to Figure 4, in one aspect, open market wireless communications device **12** includes a mobile communication device, such as mobile telephone or the like, operable on a wireless communication system. As can be appreciated, there are a variety of wireless communication systems, which often employ different spectrum bandwidths and/or different air interface technologies. Exemplary systems include CDMA (CDMA 2000, EV DO, WCDMA), OFDM, or OFDMA (Flash-OFDM, 802.20, WiMAX), FDMA/TDMA (GSM) systems using FDD or TDD licensed spectrums, peer-to-peer (*e.g*., mobile-to-mobile) *ad hoc* network systems often using unpaired unlicensed spectrums, and 802.xx wireless LAN or BLUETOOTH techniques.

Wireless communications device **12** includes processor component **32** for carrying out processing functions associated with one or more of components and functions described herein. Processor component **32** can include a single or multiple sets of processors or multi-core processors. Moreover, processing component **32** can be implemented as an integrated processing system and/or a distributed processing system.

Wireless communications device **12** further includes a memory **24,** such as for storing local versions of applications/modules being executed by processor component **32.** Memory **24** can include random access memory (RAM), read only memory (ROM), and a combination thereof. Additionally, in some aspects (not shown in Fig. 4), memory **24** includes wireless device profile information **22** and/or messaging module 26.

Further, wireless communications device **12** includes a communications module **34** that provides for establishing and maintaining communications with one or more parties utilizing hardware, software, and services as described herein. Communications component **34** may carry communications between components on wireless communications device **12**, as well as between wireless communications device **12** and external network devices **40,** such as devices located across a communications network and/or devices serially or locally connected to wireless communications device **12.**

Additionally, wireless communications device **12** may further include a data store **90,** which can be any suitable combination of hardware and/or software that provides for mass storage of information, databases, and programs employed in connection with aspects described herein. Optionally, in some aspects, (not shown in Fig, 4) data store **90** may include wireless device profile information **22.**

Wireless communications device **12** may additionally include a user interface component **92** operable to receive inputs from a user of wireless communications device **12,** and to generate outputs for presentation to the user. User interface component **92** may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component **92** may include one or more output devices, including but not limited to a display, a speaker, a haptic feedback mechanism, a printer, any other mechanism capable of presenting an output to a user, or any combination thereof.

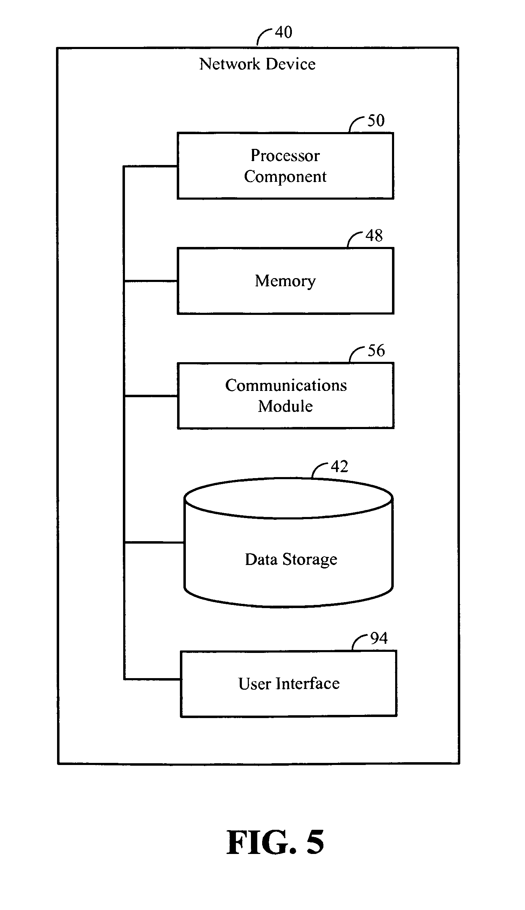

Referring to Figure 5, in one aspect, network device **40** is operable to receive device profile information from open market wireless devices and. optionally, request device profile information. Network device **40** includes any type of network-based communication device, such as a network server operable on a communication network **14.** Communication network **14** may be a wired or wireless communication system, or a combination of both, and includes the wireless network on which open market wireless device **12** operates.

Network device **40** includes a processor component **50** for carrying out processing functions associated with one or more of components and functions described herein. Processor component **50** can include a single or multiple sets of processors or multi-core processors. Moreover, processor component **50** can be implemented as an integrated processing system and/or a distributed processing system.

Network device **40** further includes a memory **48,** such as for storing local versions of applications being executed by processor component **50.** Memory **48** can include random access memory (RAM), read only memory (ROM), and a combination thereof. Optionally, in some aspects, memory **48** includes a device identification request module **52,** and/or a messaging module **54** and the like.

Further, network device **40** includes a communications module **56** that provides for establishing and maintaining communications with one or more parties utilizing hardware, software, and services as described herein. Communications module **56** may carry communications between components on network device **40,** as well as between network device **40** and external devices, such as wireless communication device **12,** and including devices located across communications network **14** and/or devices serially or locally connected to network device **40.** In one aspect, communications module **56** is operable for receiving device identification messages **28** and sending device identification request messages **82** and the like.

Additionally, network device **40** may further include storage devices **42,** which can be any suitable combination of hardware and/or software that provides for mass storage of information, databases, and programs employed in connection with aspects described herein. In certain aspects, storage devices **42** may store the removable module/wireless device data **44,** and the like.

Network device **40** may additionally include a user interface component **94** operable to receive inputs from a user of network device **40,** and to generate outputs for presentation to the user. User interface component **94** may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component **94** may include one or more output devices, including but not limited to a display, a speaker, a haptic feedback mechanism, a printer, any other mechanism capable of presenting an output to a user, or any combination thereof.

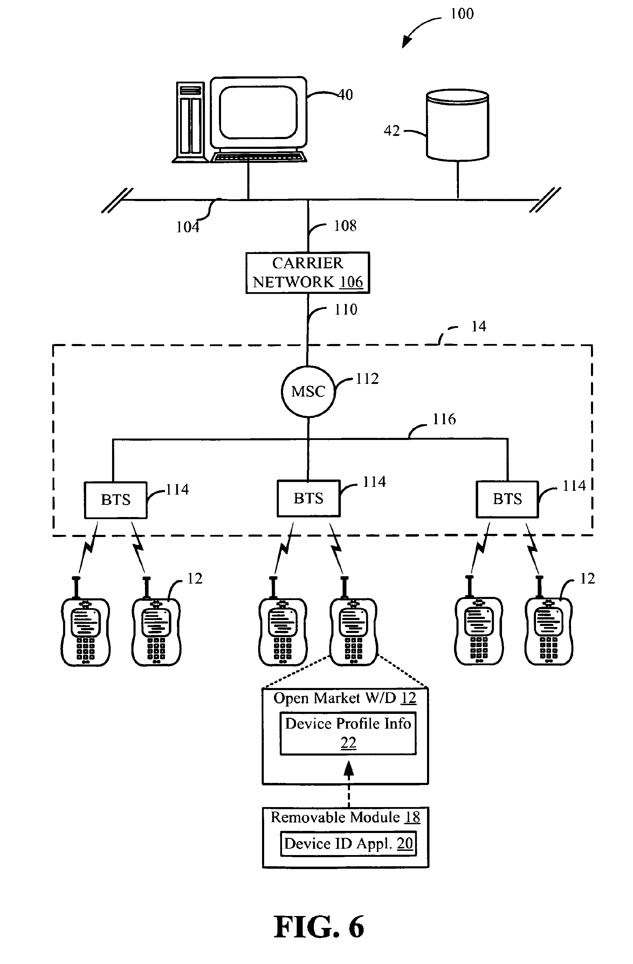

Figure 6 represents a block diagram of a cellular network **100,** which may be used in conjunction with present aspects to communicate wireless messages. A wireless network **14** may be included within cellular network **100** and, as such may be implemented to communicate the device identification messages from the wireless devices/ removable modules to the network operator and the device identification request messages from the network operator to the wireless devices/ removable modules. Referring to Figure 6, in one aspect, open market wireless device **12** comprise a wireless communication device, such as a cellular telephone. In present aspects, wireless communication devices are configured to communicate via the cellular network **100.** The cellular network **100** provides wireless communication device **12** the capability to communicate communication data packets, such as SMS data packets or other messaging data packets. The cellular telephone network **100** may include wireless network **14** connected to a wired network **104** via a carrier network **106.** Figure 6 is a representative diagram that more fully illustrates the components of a wireless communication network and the interrelation of the elements of one aspect of the present system. Cellular telephone network **100** is merely exemplary and can include any system whereby remote modules, such as wireless communication devices **12** communicate over-the-air between and among each other and/or between and among components of a wireless network **14,** including, without limitation, wireless network carriers and/or servers.

In network **100,** network device **40,** such as a network server, can be in communication over a wired network **104** (e.g. a local area network, LAN). Further, a network database/storage device **42** may be in communication with network device **40** via the wired network **104.** Network device **40** may receive and/or generate and communicate communication data packets, such as SMS message data packets to and from the open market wireless devices **12.** Network device **40** and database **42** may be present on the cellular telephone network **100** with any other network components that are needed to provide cellular telecommunication services. Network device **40** and database **42** communicate with carrier network **106** through a data links **108** and **110,** which may be data links such as the Internet, a secure LAN, WAN, or other network. Carrier network **106** controls messages (generally being data packets) sent to a mobile switching center ("MSC") **112.** Further, carrier network **106** communicates with MSC **112** by a network **110,** such as the Internet, and/or POTS ("plain old telephone service"). Typically, in network **110,** a network or Internet portion transfers data, and the POTS portion transfers voice information. MSC **112** may be connected to multiple base stations ("BTS") **114** by another network **116,** such as a data network and/or Internet portion for data transfer and a POTS portion for voice information. BTS **214** ultimately broadcasts messages wirelessly to the wireless communication devices **12**, by short messaging service ("SMS"), or other over-the-air methods.

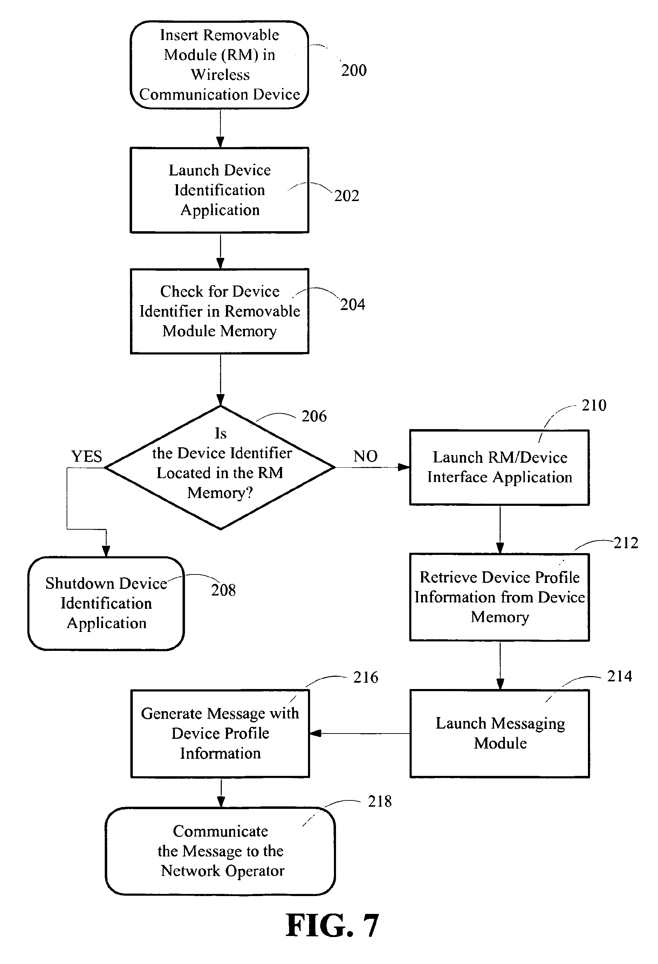

Referring to Figure 7, a flow diagram is depicted of a methodology for network identification of open market wireless devices, in accordance with an aspect of the present innovation. At Event **200,** a removable module is inserted or otherwise received in an open market wireless communication device. It should be noted that while the removable module is referred to herein as being inserted or received by the wireless device any associated communication between the removable module and the wireless device constitutes receipt and/or insertion of the removable module in the wireless device. The removable module includes configuration to enable the removable module to communicate with a wireless network in control of the network operator. In this regard, in the open market scenario, the removable module enables wireless network communication, as opposed to the open market wireless device enabling the wireless network communication.

At Event **202,** based on the receipt of the removable module in the wireless device, the device identification application is launched. In most aspects, the device identification will reside on the removable module because the removable module is controlled by the network operator, which is the entity that desired device identification. In alternate aspects, it is feasible for the device identification application to reside on the wireless device.

At Event **204,** the device identification application may check in removable module memory for a device identifier associated with the wireless device. As previously noted, presence of the device identifier in the removable module memory means that the removable module was previously received in the wireless device and that the wireless device profile data was thus previously retrieved from wireless device memory and communicated to the network operator. Conversely, absence of the device identifier in the removable module memory means that this is the initial, first-time receipt of the removable module in this particular wireless device and thus retrieval of the device profile information from device memory and communication to the network operator is required.

At Decision **206,** the determination is made as to whether the device identifier for the present wireless device is currently stored in the removable module memory. If the device identifier is stored in the removable module memory then, at Event **208,** the device identification application may be shutdown and no further device identification is required. If the device identifier is not stored in the removable module memory then, at Event 210, the removable module /wireless device interface application is launched to allow the device identification application to interface with the profile information storage locations and the messaging module. At Event 212, the device profile information is retrieved from wireless device memory and, at Event 214, the messaging module, such as a SMS module or the like, is launched and the profile information is communicated to the messaging module.

At Event 216, the messaging module generates a device identification message that includes at least a portion of the profile information. The messaging module may be specially formatted to provide the device information to be automatically recognized by the receiving network device as device profile information. Once the device identification message is generated, at Event **218,** the message is wirelessly communicated to the network operator or a third party entity as configured within the device identification application.

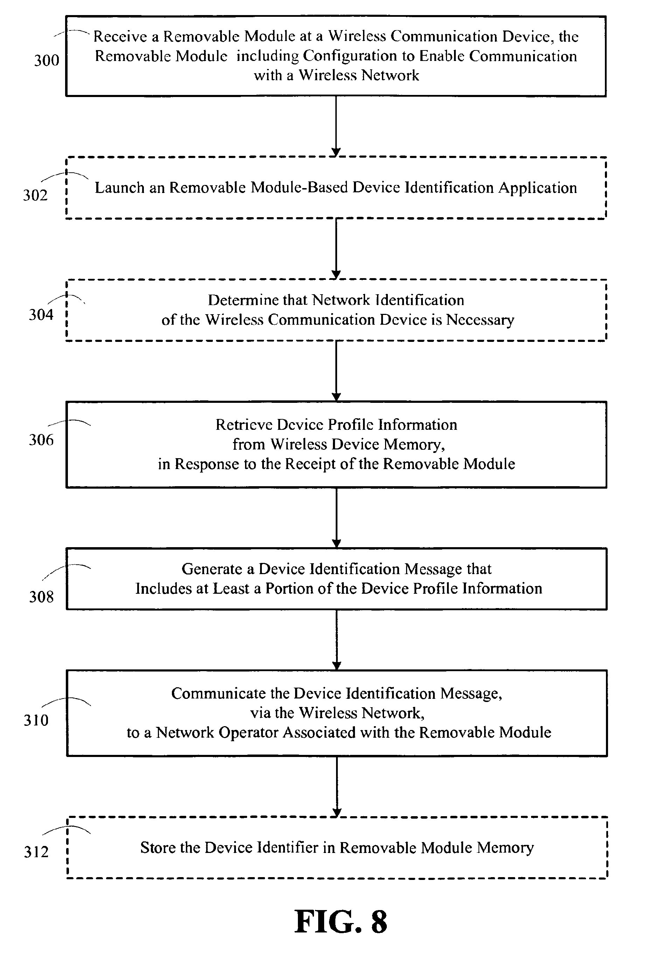

Figure 8 is another flow diagram of a methodology for network identification of open market wireless devices, according to another aspect of the present innovation. At Event **300,** the open market wireless device receives or otherwise comes in communication with a removable module. As previously noted, the removable module includes configuration to enable the removable module to communicate with a wireless network in control of the network operator. At optional Event **302,** a removable module -based device identification application is launched. As previously noted, since the removable modules are controlled by the network operators, in preferred aspects the device identification application will reside on the removable module. However, other aspects may provide for the device identification application to reside on the wireless device.

At optional Event **304,** a determination is made that network identification of the wireless communication device is necessary. In one aspect, such a determination may be conducted by the device identification application, which verifies that the device identifier associated with the current associated device is not stored in removable module memory. It should be noted that in alternate aspects, the device identification application may be configured such that every time the removable module is received, inserted or otherwise comes in communication with a open market wireless device, the profile information is communicated to the network operator. In such aspects, no determination needs to be made to determine if network identification is required, since all receipts, insertions trigger device identification.

At Event **306,** the device profile information is retrieved from wireless device memory, in response to the receipt, (*i.e*., insertion) of the removable module in the open market wireless device. As previously noted, in some aspects the retrieval of the wireless device information by a removable module-based device identification application may be facilitated by an interface application that provides the necessary protocol and interface information to allow the removable module -based application to communicate with the device applications/modules and/or storage locations.

At Event **308,** a device identification message is generated that includes at least a portion of the device profile information. As previously noted, the network operator may configure the removable module to communicate all or any portion of the device's profile information. In one aspect, generating the wireless communication may include launching a messaging module, such as a SMS module or the like based on a prompt from the device identification application, receiving the profile information from the storage location and automatically generating the device identification message based on receipt of the device profile information.

At Event **310,** the device identification message is wirelessly communicated, via the wireless network, to the network operator and/or designated third party entities. At optional Event **312,** the device identifier, such as the ESN, MIAD or the like, as determined from the profile information is stored in removable module memory. Storing of the device identifier in the removable module memory occurs in those aspects in which a determination is made as to whether network identification of the wireless device is required (*i.e*., whether identification was previously performed).

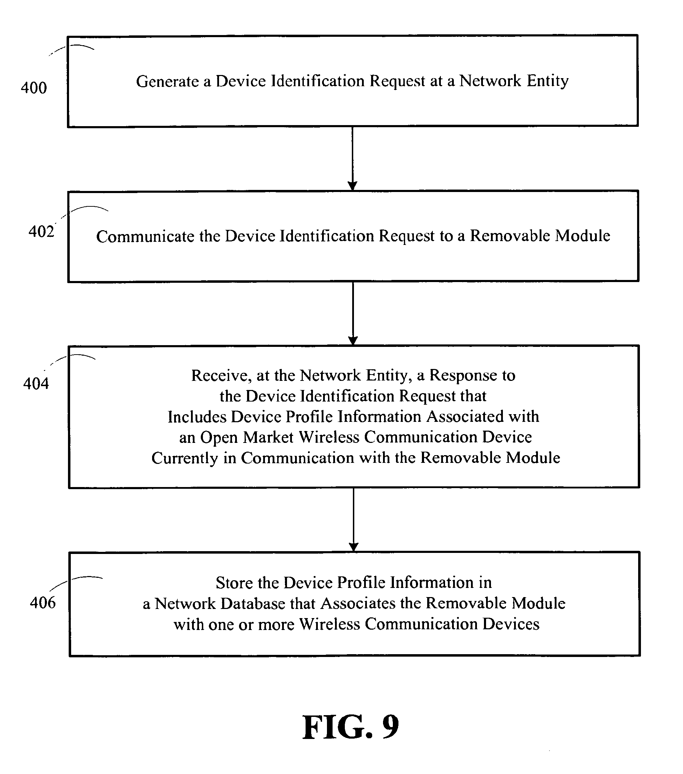

Figure 9 is another flow diagram of a methodology for requesting wireless device at a network entity, according to another aspect of the present innovation. At Event **400**, the network entity generates a device identification request. The device identification request may be generated by launching an associated device identification request application. In one aspect, the generation of the device identification request is based on a user/subscriber contacting the network operator/customer care representative for technical support or the like. In such aspects, the customer care representative may dynamically request and retrieve device profile information from the device in communication with the removable module, without any intervention on behalf of the user/subscriber. In other aspects, the generation of the device identification request may be configured to occur automatically at predetermined intervals based on a need to update or verify device profile information. In one aspect, the device identification request may comprise a wireless message, such as a SMS message or the like. As such, generation of the message may further include launching the necessary messaging module to generate the device identification request.

At Event **400,** the device identification request is communicated the network address associated with the removable module and, at Event **410,** the device identification response message is received at the network entity. The device identification response message includes device profile information associated with the open market wireless device currently in communication with the removable module. At Event **406,** the device profile information is stored in a network database that associates the removable module with the one or more open market wireless devices that have been in communication with the removable module. In turn, the network database can be used by the network operator and/or third party entities to track the type and configuration of wireless devices used in their respective networks.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Thus, present aspects provide for methods, apparatus and systems for automatically providing network operators with identification of open market wireless devices that are used in the operator's respective network. Present aspects accomplish such by retrieving device profile information in response to the network operator's removable module being associated with (*i.e*., inserted into) a wireless device and communicating the device profile information to the network operator or the like. This allows for the network operator or third party entity to track and/or monitor the type of wireless devices existing in their respective wireless network. In addition, the automated nature of the tracking obviates the need for the subscribers/users of the removable modules to manually or otherwise provide the device identification to the network operators. In addition, present aspects provide for the network operators or third party entities to remotely and dynamically access the removable module to retrieve profile information related to the wireless device that a removable module is currently in communication with. This aspect, allows the network operator or third party entity to automatically retrieve and, in some aspects, update the profile information without requiring user intervention.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for providing identification of an open market wireless communication device (12) comprising a removable module (18), the method comprising:
contacting, by the removable module (18), a network entity (16) for assistance;
receiving a device identification request (82) at the removable module (18), the device identification request (82) being generated (400) at the network entity (16) based on the removable module (18) contacting the network entity (16) for assistance;
retrieving, by a device identification application (20) of the removable module (18), device profile information (22) stored in a memory (24) of the open market wireless communication device (12) and prompting the open market wireless device (12) to generate a response (28) to the device identification request (82);
transmitting, from the open market wireless communication device (12)to the network entity (16), the response (28) to the device identification request (82) that includes the device profile information (22) associated with the open market wireless communication device (12) in communication with the removable module (18).

2. The method of claim 1, wherein the removable module (18) includes an interface application (76) that is operable to allow the device identification application (20) to interface with applications/storage on the open market wireless device (12).

3. The method of claim 2, wherein the interface application (76) provides protocols to allow the applications residing on the removable module to communicate with the applications/storage residing on the associated open market wireless communication device (12).

4. The method of claim 1, wherein receiving a device identification request further comprises receiving the device identification request (82) periodically based on a predetermined update schedule.

5. The method of claim 1, wherein receiving a device identification request further comprises receiving a Short Message Service, SMS, that includes a request for the device profile information.

6. The method of claim 1, wherein transmitting the response further comprises transmitting the response that includes device profile information including at least one of a device manufacturer identifier, or a device model identifier, or a device identifier, or a software identifier, or a software revision identifier, or a firmware identifier, or a firmware revision identifier, or a hardware identifier, or a hardware capability identifier.

7. A computer program product, comprising:
a computer-readable medium comprising:
a set of codes for causing at least one computer to perform a method according to one of the claims 1 to 6 when executed.

8. An apparatus for providing identification of an open market wireless communication device (12) comprising a removable module (18), the apparatus comprising:
means for contacting, by the removable module (18), a network entity (16) for assistance;
means for receiving a device identification request (82) at the removable module (18), the device identification request (82) being generated (400) at the network entity (16) based on the removable module (18) contacting the network entity (16) for assistance;
means for retrieving, by a device identification application (20) of the removable module (18), device profile information (22) stored in a memory (24) of the open market wireless communication device (12) and means for prompting the open market wireless device (12) to generate a response (28) to the device identification request (82);
means for transmitting, from the removable module (18) to the network entity (16), a response (28) to the device identification request (82) that includes the device profile information (22) associated with the open market wireless communication device (12) in communication with the open market wireless communication device (12).

9. The apparatus of claim 8, wherein the removable module (18) includes an interface application (76) that is operable to allow the device identification application (20) to interface with applications/storage on the open market wireless device (12).

10. The apparatus of claim 8, wherein the interface application (76) is operable to provides protocols to allow the applications residing on the removable module to communicate with the applications/storage residing on the associated open market wireless communication device (12).

11. The apparatus of claim 8, wherein the means for receiving a device identification request further comprises means for receiving the device identification request (82) periodically based on a predetermined update schedule.

12. The apparatus of claim 8, wherein means for receiving a device identification request further comprises means for receiving a Short Message Service , SMS, that includes a request for the device profile information.

13. The apparatus of claim 8, wherein the means for transmitting the response further comprises means for transmitting the response that includes device profile information including at least one of a device manufacturer identifier, or a device model identifier, or a device identifier, or a software identifier, or a software revision identifier, or a firmware identifier, or a firmware revision identifier, or a hardware identifier, or a hardware capability identifier.

## Patentansprüche

1. Verfahren zum Bereitstellen von Identifikation eines drahtlosen Offenmarkt-Kommunikationsgerätes (12), aufweisend ein entfernbares Modul (18), wobei das Verfahren aufweist:
Kontaktieren, durch das entfernbare Modul (18), einer Netzwerkeinheit (16) zur Unterstützung;
Empfangen einer Geräteidentifizierungsanfrage (82) bei dem entfernbaren Modul (18), wobei die Geräteidentifizierungsanfrage (82) bei der Netzwerkeinheit (16) erzeugt (400) wird, basierend darauf, dass das entfernbare Modul (18) die Netzwerkeinheit (16) zur Unterstützung kontaktiert;
Abrufen, durch eine Geräteidentifizierungsanwendung (20) des entfernbaren Moduls (18), von Geräteprofilinformationen (22), die in einem Speicher (24) des drahtlosen Offenmarkt-Kommunikationsgeräts (12) gespeichert sind, und Veranlassen des drahtlosen Offenmarkt-Kommunikationsgeräts (12) zum Erzeugen einer Antwort (28) auf die Geräteidentifizierungsanfrage (82);
Übertragen, von dem drahtlosen Offenmarkt-Kommunikationsgerät (12) an die Netzwerkeinheit (16), der Antwort (28) auf die Geräteidentifizierungsanfrage (82), die die Geräteprofilinformationen (22) umfasst, die dem drahtlosen Offenmarkt-Kommunikationsgerät (12) zugeordnet sind, in Kommunikation mit dem entfernbaren Modul (18).

2. Verfahren nach Anspruch 1, wobei das entfernbare Modul (18) eine Schnittstellenanwendung (76) umfasst, die eingerichtet ist, es der Geräteidentifizierungsanwendung (20) zu ermöglichen, an Anwendungen/Speicher auf dem drahtlosen Offenmarkt-Kommunikationsgerät (12) zu koppeln.

3. Verfahren nach Anspruch 2, wobei die Schnittstellenanwendung (76) Protokolle bereitstellt, um es zu ermöglichen, dass die Anwendungen, die sich auf dem entfernbaren Modul befinden, mit den Anwendungen/Speicher kommunizieren, die sich auf dem zugeordneten drahtlosen Offenmarkt-Kommunikationsgerät (12) befinden.

4. Verfahren nach Anspruch 1, wobei das Empfangen einer Geräteidentifizierungsanfrage weiterhin aufweist, periodisches Empfangen der Geräteidentifizierungsanfrage (82), basierend auf einem vorbestimmten Aktualisierungs-Zeitplan.

5. Verfahren nach Anspruch 1, wobei das Empfangen einer Geräteidentifizierungsanfrage weiterhin aufweist, Empfangen eines Short Message Service- Nachricht, SMS, die eine Anfrage für die Geräteprofilinformationen umfasst.

6. Verfahren nach Anspruch 1, wobei das Übertragen der Antwort weiterhin aufweist, Übertragen der Antwort, die Geräteprofilinformationen umfasst, einschließlich zumindest eines Gerätehersteller-Identifizierers, eines Gerätemodell-Identifizierers, eines Software-Identifizierers, eines Softwarerevisions-Identifizierers, eines Firmware-Identifizierers, eines Firmware-Revisions-Identifizierers, eines Hardware-Identifizierers, und/oder eines Hardware-Leistungsmerkmal-Identifizierers.

7. Computerprogrammprodukt, aufweisend:
Ein Computer-lesbares Medium aufweisend:
eine Menge von Anweisungen, die zumindest einen Computer veranlassen, ein Verfahren nach einem der Ansprüche 1 bis 6 durchzuführen, wenn sie ausgeführt werden.

8. Vorrichtung zum Bereitstellen von Identifizierung eines drahtlosen Offenmarkt-Kommunikationsgeräts (12), aufweisend ein entfernbares Modul (18), wobei die Vorrichtung aufweist:
Mittel zum Kontaktieren, durch das entfernbare Modul (18), einer Netzwerkeinheit (16) zur Unterstützung;
Mittel zum Empfangen einer Geräteidentifizierungsanfrage (82) bei dem entfernbaren Modul (18), wobei die Geräteidentifizierungsanfrage (82) bei der Netzwerkeinheit (16) erzeugt (400) wird, basierend darauf, dass das entfernbare Modul (18) die Netzwerkeinheit (16) zur Unterstützung kontaktiert;
Mittel zum Abrufen, durch eine Geräteidentifizierungsanwendung (20) des entfernbaren Moduls (18), von Geräteprofilinformationen (22), die in einem Speicher (24) des drahtlosen Offenmarkt-Kommunikationsgeräts (12) gespeichert sind, und Veranlassen des drahtlosen Offenmarkt-Kommunikationsgeräts (12) zum Erzeugen einer Antwort (28) auf die Geräteidentifizierungsanfrage (82);
Mittel zum Übertragen, von dem drahtlosen Offenmarkt-Kommunikationsgerät (12) an die Netzwerkeinheit (16), der Antwort (28) auf die Geräteidentifizierungsanfrage (82), die die Geräteprofilinformationen (22) umfasst, die dem drahtlosen Offenmarkt-Kommunikationsgerät (12) zugeordnet sind, in Kommunikation mit dem entfernbaren Modul (18).

9. Vorrichtung nach Anspruch 8, wobei das entfernbare Modul (18) eine Schnittstellenanwendung (76) umfasst, die dazu eigerichtet ist, es der Geräteidentifizierungsanwendung (20) zu ermöglichen, an Anwendungen/Speicher auf dem drahtlosen Offenmarkt-Kommunikationsgerät (12) zu koppeln.

10. Vorrichtung nach Anspruch 8, wobei die Schnittstellenanwendung (76) Protokolle bereitstellt, um es zu ermöglichen, dass die Anwendungen, die sich auf dem entfernbaren Modul befinden, mit den Anwendungen/Speicher kommunizieren, die sich auf dem zugeordneten drahtlosen Offenmarkt-Kommunikationsgerät (12) befinden.

11. Vorrichtung nach Anspruch 8, wobei das Mittel zum Empfangen einer Geräteidentifizierungsanfrage weiterhin aufweist:
periodisches Empfangen der Geräteidentifizierungsanfrage (82), basierend auf einem vorbestimmten Aktualisierungs-Zeitplan.

12. Vorrichtung nach Anspruch 8, wobei das Mittel zum Empfangen einer Geräteidentifizierungsanfrage weiterhin aufweist: Mittel zum Empfangen einer Short Message Service-Nachricht, SMS, die eine Anfrage für die Geräteprofilinformationen umfasst.

13. Vorrichtung nach Anspruch 8, wobei das Mittel zum Übertragen der Antwort weiterhin aufweist: Mittel zum Übertragen der Antwort, die Geräteprofilinformationen umfasst, einschließlich zumindest eines Gerätehersteller-Identifizierers, eines Gerätemodell-Identifizierers, eines Software-Identifizierers, eines Softwarerevisions-Identifizierers, eines Firmware-Identifizierers, eines Firmware-Revisions-Identifizierers, eines Hardware-Identifizierers, und/oder eines Hardware-Leistungsmerkmal-Identifizierers.

## Revendications

1. Procédé pour fournir une identification d'un dispositif de communication sans fil du marché libre (12) comportant un module amovible (18), le procédé comportant les étapes consistant à :
entrer en contact, par l'intermédiaire du module amovible (18), avec une entité de réseau (16) en vue d'une assistance ;
recevoir une demande d'identification de dispositif (82) au niveau du module amovible (18), la demande d'identification de dispositif (82) étant générée (400) au niveau de l'entité de réseau (16) sur la base du module amovible (18) entrant en contact avec l'entité de réseau (16) en vue d'une assistance ;
récupérer, par l'intermédiaire d'une application d'identification de dispositif (20) du module amovible (18), des informations de profil de dispositif (22) mémorisées dans une mémoire (24) du dispositif de communication sans fil du marché libre (12) et inviter le dispositif sans fil du marché libre (12) à générer une réponse (28) à la demande d'identification de dispositif (82) ;
transmettre, depuis le dispositif de communication sans fil du marché libre (12) à l'entité de réseau (16), la réponse (28) à la demande d'identification de dispositifs (82) qui inclut les informations de profil de dispositif (22) associées au dispositif de communication sans fil du marché libre (12) en communication avec le module amovible (18).

2. Procédé selon la revendication 1, dans lequel le module amovible (18) inclut une application d'interface (76) qui est opérationnelle pour permettre à l'application d'identification de dispositif (20) de s'interfacer avec un des applications/mémoire sur le dispositif sans fil du marché libre (12).

3. Procédé selon la revendication 2, dans lequel l'application d'interface (76) fournit des protocoles pour permettre aux applications résidant sur le module amovible de communiquer avec les applications/mémoire résidant sur le dispositif de communication sans fil du marché libre associé (12).

4. Procédé selon la revendication 1, dans lequel la réception d'une demande d'identification de dispositif comporte en outre la réception de la demande notification de dispositif (82) périodiquement sur la base d'un programme de mise à jour prédéterminé.

5. Procédé selon la revendication 1, dans lequel la réception d'une demande d'identification de dispositif comporte en outre la réception d'un service de minimessages, SMS, qui inclut une demande relative aux informations de profil.

6. Procédé selon la revendication 1, dans lequel la transmission de la réponse comporte en outre la transmission de la réponse qui inclut des informations de profil de dispositif incluant au moins l'un d'un identifiant de fabricant de dispositif, ou d'un identifiant de modèle de dispositif, ou d'un identifiant de dispositif, ou d'un identifiant de logiciel, ou d'un identifiant de révision de logiciel, ou d'un identifiant de micrologiciel, ou d'un identifiant de révision de micrologiciel, ou d'un identifiant de matériel, ou d'un identifiant de capacité de matériel.

7. Produit de programme informatique, comportant :
un support lisible par ordinateur comportant :
un ensemble de codes pour amener au moins un ordinateur à mettre en oeuvre un procédé selon l'une des revendications 1 à 6 lorsque exécuté.

8. Dispositif pour fournir une identification d'un dispositif de communication sans fil du marché libre (12) comportant un module amovible (18), le dispositif comportant :
des moyens pour entrer en contact, par l'intermédiaire du module amovible (18), avec une entité de réseau (16) en vue d'une assistance ;
des moyens pour recevoir une demande d'identification de dispositif (82) au niveau du module amovible (18), la demande d'identification de dispositif (82) étant générée (400) au niveau de l'entité de réseau (16) sur la base du module amovible (18) entrant en contact avec l'entité de réseau (16) en vue d'une assistance ;
des moyens pour récupérer, par l'intermédiaire d'une application d'identification de dispositif (20) du module amovible (18), des informations de profil de dispositif (22) mémorisées dans une mémoire (24) du dispositif de communication sans fil du marché libre (12) et des moyens pour inviter le dispositif sans fil du marché libre (12) à générer une réponse (28) à la demande d'identification de dispositif (82),
des moyens pour transmettre, depuis le module amovible (18) à l'entité de réseau (16), une réponse (28) à la demande identification de dispositif (82) qui inclut les informations de profil de dispositif (22) associées au dispositif de communication sans fil du marché libre (12) en communication avec le dispositif de communication sans fil du marché libre (12).

9. Dispositif selon la revendication 8, dans lequel le module amovible (18) inclut une application d'interface (76) qui est opérationnelle pour permettre à l'application d'identification de dispositif (20) de s'interfacer avec des applications/mémoire sur le dispositif sans fil du marché libre (12).

10. Dispositif selon la revendication 8, dans lequel l'application d'interface (76) est opérationnelle pour fournir des protocoles afin de permettre aux applications résidant sur le module amovible de communiquer avec les applications/mémoire résidant sur le dispositif de communication sans fil du marché libre associé (12).

11. Dispositif selon la revendication 8, dans lequel les moyens destinés à recevoir une demande d'identification de dispositif comportent en outre des moyens pour recevoir la demande identification de dispositif (82) basée périodiquement sur un programme de mise à jour prédéterminé.

12. Dispositif selon la revendication 8, dans lequel les moyens destinés à recevoir une demande identification de dispositif comportent en outre des moyens pour recevoir un service de minimessages, SMS, qui inclut une demande relative aux informations de profil de dispositif.

13. Dispositif selon la revendication 8, dans lequel les moyens destinés à transmettre la réponse comportent en outre des moyens pour transmettre la réponse qui inclut des informations de profil de dispositif incluant au moins l'un d'un identifiant de fabricant de dispositif, ou d'un identifiant de modèle de dispositif, ou d'un identifiant de dispositif, ou d'un identifiant de logiciel, ou d'un identifiant de révision de logiciel, ou d'un identifiant de micrologiciel, ou d'un identifiant de révision de micrologiciel, ou d'un identifiant de matériel, ou d'un identifiant de capacité de matériel.
